(19) Europäisches Patentamt
European Patent Office
Office européen des brevets

(11) **EP 4 279 318 A1**

(12) **EUROPEAN PATENT APPLICATION**
published in accordance with Art. 153(4) EPC

(43) Date of publication:
**22.11.2023  Bulletin 2023/47**

(21) Application number: **22738906.1**

(22) Date of filing: **05.01.2022**

(51) International Patent Classification (IPC):
***B60L 5/20*** *(2006.01)*        ***B60L 5/28*** *(2006.01)*

(52) Cooperative Patent Classification (CPC):
**B60L 5/18; B60L 5/20; B60L 5/28; B61C 17/00**

(86) International application number:
**PCT/CN2022/070344**

(87) International publication number:
**WO 2022/152025 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **18.01.2021  CN 202110062746**

(71) Applicant: CRRC Qingdao Sifang Co., Ltd.
**Qingdao, Shandong 266111 (CN)**

(72) Inventors:
• **YU, Yaxin**
  **Qingdao, Shandong 266111 (CN)**

• **YU, Xiaojie**
  **Qingdao, Shandong 266111 (CN)**
• **CUI, Wencheng**
  **Qingdao, Shandong 266111 (CN)**
• **GUO, Chao**
  **Qingdao, Shandong 266111 (CN)**
• **WANG, Yunfei**
  **Qingdao, Shandong 266111 (CN)**

(74) Representative: **Prinz & Partner mbB**
**Patent- und Rechtsanwälte**
**Rundfunkplatz 2**
**80335 München (DE)**

(54) **RAIL TRAIN PANTOGRAPH CONTROL METHOD AND APPARATUS, STORAGE MEDIUM AND COMPUTER DEVICE**

(57)    A rail train pantograph control method and apparatus, a storage medium and a computer device. Said method comprises: determining state data of two pantographs on a rail train; according to the state data of the two pantographs, determining a pantograph selected for the rail train. The technical problems in the related art that manual selection of a pantograph affects the service life of the pantograph and causes great difficulty in maintenance are solved.

**Fig. 1**

## Description

## FIELD

The present application relates to the technical field of rail trains, and in particular to a method and an apparatus for controlling pantographs of a rail train, a storage medium and a computer device.

## BACKGROUND

In rail transit vehicles, a vehicle may be equipped with two pantographs, and a vehicle only uses one pantograph during normal operation. When the used pantograph rises, the other pantograph is in a lowering state. In the current practice, which pantograph is selected to work is controlled by the driver, and the pantograph selected by this method is relatively random. For example, if a pantograph that has been used for a long time is selected again, the service life of the pantograph is seriously affected. The pantograph that is not selected always not be selected, resulting in inconsistent maintenance periods for the two pantographs, and increasing the workload and operational risks of maintenance personnel.

No effective solution has been proposed for the problems mentioned above.

## SUMMARY

A method and an apparatus for controlling pantographs of a rail train, a storage medium and a computer device are provided according to embodiments of the present application, to at least solve the technical problems that the artificial selection of pantograph affects the service life of the pantograph and causes great difficulty in maintenance in the conventional technology.

A method for controlling pantographs of a rail train is provided according to one aspect of the embodiments of the present application, and includes: determining state data of two pantographs on the rail train; and determining a pantograph selected for the rail train based on the state data of the two pantographs.

In an embodiment, determining the pantograph selected for the rail train based on the state data of the two pantographs includes: determining a wear degree of each of the two pantographs based on the state data of each of the two pantographs; and comparing the wear degrees of the two pantographs to determine the pantograph selected for the rail train.

In an embodiment, the state data of the two pantographs comprises mechanical wear parameters of carbon sliders of the two pantographs and electrical wear parameters of the carbon sliders of the two pantographs, determining the wear degree of each of the two pantographs based on the state data of the two pantographs comprises assigning a first weight to the mechanical wear parameters and assigning a second weight to the electrical wear parameters; and summing the mechanical wear parameter assigned with the first weight and the electrical wear parameter assigned with the second weight of each of the two pantographs to obtain the wear degree of each of the two pantographs.

In an embodiment, determining the mechanical wear parameters of the carbon sliders of the two pantographs and the electrical wear parameters of the carbon sliders of the two pantographs comprises: for each of the two pantographs, acquiring a running distance of the carbon slider of the pantograph while the carbon slider contacts a power grid, and determining the mechanical wear parameter of the carbon slider of the pantograph based on the acquired running distance of the carbon slider of the pantograph while the carbon slider contacts the power grid; and for each of the two pantographs, acquiring a heat loss of the carbon slider of the pantograph, and determining the electrical wear parameter of the carbon slider of the pantograph based on the acquired heat loss of the carbon slider of the pantograph.

In an embodiment, the first weight is 30% and the second weight is 70%.

In an embodiment, comparing the wear degrees of the two pantographs to determine the pantograph selected for the rail train comprises: based on the wear degrees of the two pantographs being same, selecting a predetermined pantograph of the two pantographs; and based on the wear degrees of the two pantographs being different, selecting a pantograph with a lower wear degree.

An apparatus for controlling pantographs of a rail train is provided according to another aspect of the embodiments of the present application, and includes: a collection unit, configured to collect state data of two pantographs on the rail train; and a determination unit, configured to determine a pantograph selected for the rail train based on the state data of the two pantographs.

A rail train is provided according to another aspect of the embodiments of the present application. The rail train includes the apparatus for controlling pantographs of a rail train described above.

A storage medium is provided according to another aspect of the embodiments of the present application. The storage medium includes a program stored thereon, the program, when being executed, controls a device where the storage medium is located to execute any of the above methods for controlling pantographs of a rail train .

A computer device is provided according to another aspect of the embodiment of the present application. The computer equipment includes a processor and a memory, the memory stores a computer program, and the processor is configured to execute the computer program stored in the memory, and the computer program, when being executed, causes the processor to execute any of the above methods for controlling pantographs of a rail train.

In the embodiments of the present application, the purpose of determining the pantograph selected for the rail train is achieved by determining the state data of the two pantographs on the rail train, thus realizing the technical effect of determining the pantograph selected for the rail train based on the states of the pantographs on the rail train, and further solving the technical problems that the artificial selection of the pantograph affects the service life of the pantograph and causes a great difficulty in maintenance in the conventional technology.

## BRIEF DESCRIPTION OF THE DRAWINGS

The accompanying drawings described here are used to provide understanding of the present application and constitute a part of the present application. The schematic embodiments and explanations thereof are used to explain the present application and do not constitute improper limitations of the present application.

Figure 1 is a flow chart of a method for controlling pantographs of a rail train provided according to an embodiment of the present application;

Figure 2 is a schematic diagram of configurations of pantographs of a rail train provided according to an embodiment of the present application;

Figure 3 is a flow chart of a method for controlling pantographs of a rail train provided according to an embodiment of the present application; and

Figure 4 is a structural block diagram of an apparatus for controlling pantographs of a rail train provided according to an embodiment of the present application.

## DETAILED DESCRIPTION OF EMBODIMENTS

In order to enable those skilled in the art to better understand the solutions of the present application, the technical solutions in the embodiments of the present application is clearly and completely described below in conjunction with the accompanying drawings. Obviously, the described embodiments are only a part of the embodiments of the present application, not all embodiments. All other embodiments obtained by those skilled in the art based on the embodiments in the present application without creative efforts shall fall within the protection scope of the present application.

It should be noted that terms such as "first" and "second" in the description, claims and the accompanying drawings of the present application, are used to distinguish similar objects, and are not necessarily used to describe a specific order or sequence. It should be understood that the terms used in this way are interchangeable under appropriate circumstances, so that the embodiments of the present application described herein can be implemented in orders other than those illustrated or described herein. In addition, terms "comprise" and "have", and any variations thereof, are intended to cover a non-exclusive inclusion. For example, a process, method, system, product, or device that includes a series of steps or units, is not limited to the steps or units explicitly listed, but may include other steps or units not explicitly listed or inherent to the process, method, product, or device.

A method for controlling pantographs of a rail train is provided according to the embodiments of the present application. It should be noted that the steps shown in the flow charts of the accompanying drawings may be executed in such a computer system that stores a set of computer executable instructions, and although logical orders are shown in the flow charts, in some cases, the steps may be executed in an order different from the orders that are shown or described herein.

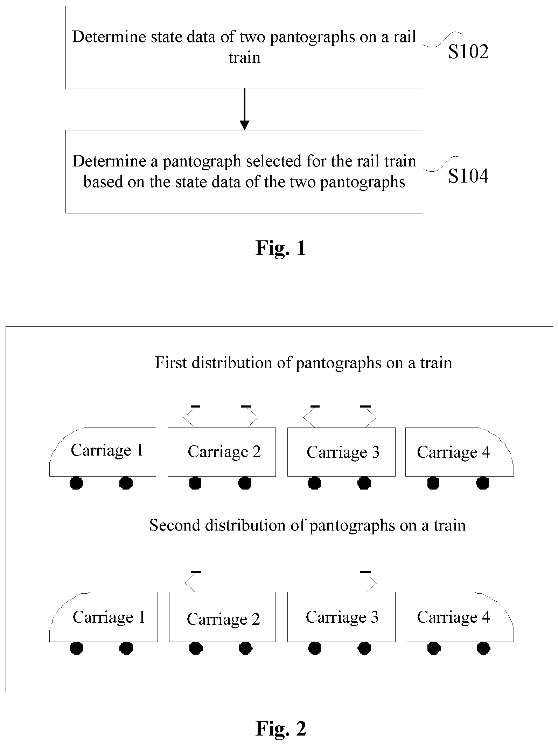

Figure 1 is a flow chart of a method for controlling pantographs of a rail train according to an embodiment of the present application. As shown in Figure 1, the method includes step S102 and step S104:

Step S102, determining state data of two pantographs on the rail train; and

Step S104, determining a pantograph selected for the rail train based on the state data of the two pantographs.

The pantograph selected for the rail train is determined based on the state data of the two pantographs through the above steps. The state data of the pantographs identifies the usage of the pantographs, therefore the technical effect of determining the pantograph selected for the rail train based on the states of the pantographs on the rail train is realized, thereby solving the problem that the artificial selection of the pantograph affects the service life of the pantograph and causes a great difficulty in maintenance in the conventional technology.

The embodiment of the present application relates to a selection method for two pantographs on a rail train. Only one pantograph is allowed to rise on each vehicle at any time when the vehicle is running. For example, when a pantograph selection switch is not in AUTO position, a processing method of the conventional technology is adopted where the pantograph selection switch determines whether pantograph 1 or pantograph 2 is raised, that is, a train driver actively selects which pantograph to be used. When the pantograph selection switch is in AUTO position, the method provided according to the embodiment of the present application is adopted where a network control system determines which pantograph to be raised through a comprehensive calculation based on received information.

As an optional embodiment, the technical solution that at least two pantographs are arranged on a rail train may include various situations. For example, Figure 2 is a schematic diagram of configurations of pantographs of a rail train according to an embodiment of the present application. As shown in Figure 2, there are at least two distributions of pantographs on the rail train: 1) two pantographs for selection are arranged on a same carriage, for example, both are arranged on carriage 2; 2) two pantographs for selection are arranged on different carriages, for example, one pantograph is arranged on carriage 2, and the other pantograph is arranged on carriage 3.

As an optional embodiment, determining the pantograph selected for the rail train based on the state data of the two pantographs may be performed as follows: determining a wear degree of each of the two pantographs based on the state data of each of the two pantographs; and comparing the wear degrees of the two pantographs to determine the pantograph selected for the rail train. The wear degrees of the pantographs are determined through the state data of the pantographs, and the wear degrees of two pantographs are compared to determine the selected pantograph. Since the wear degree can indicate the usage degree of the pantograph to a certain extent, a pantograph with a relatively low usage degree may be selected accordingly.

For example, in the embodiment of the present application, the network control system may be used to complete a selection control of the two pantographs, effectively avoiding excessive wear of a carbon slider of a certain pantograph due to excessive working hours, and ensuring that the carbon sliders of the two pantographs are equally worn. For example, the pantograph with a relatively low wear degree may be determined to be raised through the comprehensive calculation of the network control system. The embodiment of the present application has advantages of high technical reliability, simple implementation, saving manpower and material costs for frequent replacements of carbon sliders and so on.

As an embodiment, the wear of the carbon slider of the pantograph generally includes: "mechanical wear" and "electrical wear". "Mechanical wear" is mainly related to a running distance of the carbon slider while the carbon slider contacts a high-voltage power grid. "Electrical wear" mainly refers to "heat loss" of the carbon slider, and "heat loss" is related to a conduction current of the carbon slider.

As an embodiment, there are multiple ways for determining the wear degree of each of the two pantographs based on the state data of each of the two pantographs. For example, determining the wear degree of each of the two pantographs based on the state data of each of the two pantographs may be as follows: in a case that the state data of the two pantographs includes mechanical wear parameters of the carbon sliders of the pantographs and electrical wear parameters of the carbon sliders of the pantographs, assigning a first weight to the mechanical wear parameters and assigning a second weight to the electrical wear parameters; and summing the mechanical wear parameter assigned with the first weight and the electrical wear parameter assigned with the second weight of each of the two pantographs to obtain the wear degree of each of the two pantographs.

The wear degrees of the pantographs can be reasonably determined through the above method, making the choice of which pantograph to be used for work more reasonable. The above two parameters may be used to determine the wear degree of the pantograph: the mechanical wear parameter and the electrical wear parameter of the carbon slider of the pantograph. The wear degree of the pantograph can be accurately and reliably determined by comprehensively considering the two parameters. For example, if only the heat loss of the carbon slider of the pantograph is considered, and the mechanical wear degree of the pantograph in different operating lines is not taken into consideration, there may be a situation where the running distance is long, but a current on the carbon slider is relatively low since the train is in an idle running condition for a long time, and the heat loss is relatively low due to low heating, and thus the estimated overall wear of the carbon slider is slight. If only the mechanical wear of the carbon slider of the pantograph is considered, and the heat loss degree of the pantograph in different operating conditions is not taken into consideration, there may be a situation where the running distance is very short, but the current on the carbon slider is relatively large due to frequent traction and braking conditions of the train, the heat loss is relatively large due to a severe heating, and thus the estimated overall wear of the carbon slider is slight. Both of the above situations belong to one-sided consideration of the parameters that affect the wear degree, resulting in inaccurate estimation of the overall wear degree of the carbon slider.

The above situations lead to incomplete evaluations of the true wear degree of the pantograph. In addition, it should be noted that the selection of the mechanical wear parameter of the carbon slider of the pantograph and the electrical wear parameter of the carbon slider of the pantograph is only an example to characterize the wear degree of the pantograph. Other parameters that affect the wear degree of the pantograph may also be used as factors to evaluate the wear degree of the pantograph.

As an embodiment, the first weight may be set to 30%, and the second weight may be set to 70%. It should be noted that setting the first weight to 30% and the second weight to 70% is only an example, which may be determined according to the specific situations of the rail train. For example, the weights may be reassigned when considering factors such as the specific operating environment of the rail trains or the material of the carbon slider. Moreover, weights may be assigned to other parameters when other parameters are also considered for the wear degree of the pantograph.

As an embodiment, the mechanical wear parameters of the carbon sliders of the pantographs and the electrical wear parameters of the carbon sliders of the pantographs may be determined in various ways. For example, for determining the mechanical wear parameters of the carbon sliders of the pantographs, the running distances of the carbon sliders of the two pantographs while the carbon sliders contact the power grid may be acquired first, and the mechanical wear parameters of the carbon sliders of the two pantographs may be determined based on the acquired running distances of the carbon sliders of the two pantographs while the carbon sliders contact the power grid. For determining the electrical wear parameters of the carbon sliders of the pantographs, the heat losses of the carbon sliders of the two pantographs may be acquired first, and the electrical wear parameters of the carbon sliders of the two pantographs may be determined based on the acquired heat losses of the carbon sliders of the two pantographs. Since the pantograph is selected from a limited number of pantographs, multiple pantographs may be compared when selecting the pantograph, to select a pantograph with a relatively low wear degree for work. The comparison may be performed in many ways. A relatively simple and fast way may be as follows: determining a percentage of the running distance of each of the two pantographs in a sum of the running distances of the two pantographs, and taking the percentage as the mechanical wear parameter of the carbon slider of the corresponding pantograph; determining a percentage of the heat loss of each of the two pantographs in a sum of the heat losses of the two pantographs, and taking the percentage as the electrical wear parameter of the carbon slider of the corresponding pantograph.

As an embodiment, determining the running distance of the carbon slider of the pantograph and the heat loss of the carbon slider of the pantograph may be realized in various ways, for example, may be realized as follows: acquiring lift state data (mainly to calculate the duration that the carbon slider of the pantograph contacts the high-voltage power grid) of the pantograph and speed data of the rail train, and determining the running distance of the carbon slider of the pantograph based on the lift state data of the pantograph and the speed data of the rail train; acquiring an input terminal current collected by a traction auxiliary power supply system of the rail train, and determining the heat loss of the carbon slider of the pantograph based on the input terminal current, a resistance of the carbon slider of the pantograph and the lift state data (mainly to calculate the duration that the carbon slider of the pantograph contacts the high-voltage power grid) of the pantograph.

As an embodiment, taking pantographs A and B as an example, determining the running distance of the carbon slider of the pantograph and the heat loss of the carbon slider of the pantograph may be realized as follows.

Until time ti, the running distance of the carbon slider of the pantograph while the carbon slider contacts the high-voltage power grid is:

$$s_{t_1} = \int_0^{t_1} v_t \times t$$

In the formula,

$s_{t1}$ is a cumulative running distance of the carbon slider of the pantograph while the carbon slider contacts the high-voltage power grid until time $t_1$;
$v_t$ is an instantaneous speed of the rail train, and the instantaneous speed is calculated based on an instantaneous rotate speed of a traction motor, a gear ratio of a gearbox, and a diameter of a wheel; and
$t$ is a duration that the carbon slider of the pantograph contacts the high-voltage grid, the duration is obtained by recording and accumulating times that the carbon slider of the pantograph contacts the high-voltage grid by the network system.

Until time ti, a cumulative heat loss of a carbon slider of a pantograph is:

$$Q_{t_1} = R \int_0^{t_1} I_t^2 \times t$$

In the formula,

$Q_{t1}$ is a cumulative heat loss of the carbon slider of the pantograph until time ti;
$I_t$ is an instantaneous current of the carbon slider of the pantograph, the electric energy obtained by the pantograph from a high-voltage catenary is mainly used for traction auxiliary equipment, and the instantaneous current of the carbon slider of the pantograph can be obtained by summing instantaneous input currents of all traction auxiliary equipment connected to the pantograph;
$R$ is a resistance of the carbon slider of the pantograph; and
$t$ is a duration that the carbon slider of the pantograph contacts the high-voltage power grid, and t is recorded and accumulated by the network system.

Through the above formulas, it can be obtained that, until time $t_1$, the cumulative running distances of the carbon sliders of the two pantographs A and B while the carbon sliders contact the high-voltage power grid are $S_{At1}$ and $S_{Bt1}$, the cumulative heat losses of the carbon sliders of pantographs A and B are $Q_{At1}$, and $Q_{Bt1}$. Wear proportions of pantographs A and B after considering a mechanical wear weight m and an electrical wear weight n are:

a wear proportion of pantograph A is:

$$\frac{s_{At_1}}{s_{At_1} + s_{Bt_1}} \times m + \frac{Q_{At_1}}{Q_{At_1} + Q_{Bt_1}} \times n$$

a wear proportion of pantograph B is:

$$\frac{s_{Bt_1}}{s_{At_1} + s_{Bt_1}} \times m + \frac{Q_{Bt_1}}{Q_{At_1} + Q_{Bt_1}} \times n$$

The wear proportion of pantograph A can indicate the wear degree of pantograph A, and the wear proportion of pantograph B can indicate the wear degree of pantograph B.

It should be noted that the weights m and n may be values obtained based on experience. When applied to different projects, the weights may be adjusted according to factors such as different manufacturers of carbon sliders of the pantographs, different conditions of high-voltage catenaries and other factors, and the weights are finally determined according to actual practice. The weights m and n may be expressed as percentages or decimals. In addition, in a case that only the mechanical wear parameter and the electrical wear parameter are considered, a percentage of a sum of the weights m and n may be 100%. In a case that other parameters are considered in addition to the mechanical wear parameter and the electrical wear parameter, the percentage of the sum of the weights m and n may be less than 100%.

The wear degrees of the carbon sliders of the two pantographs may be calculated through the above method, which provides a basis for subsequent selection of which pantograph to work.

As an embodiment, after the wear degrees of the two pantographs are determined through a comprehensive analysis, the selection of the pantograph may be performed as follows: if the wear degrees of the two pantographs are same, a predetermined pantograph of the rail train is selected for use; and if the wear degrees of the two pantographs of the rail train are different, a pantograph with a lower wear degree is selected for use. Problems that the system does not know how to deal with due to special conditions can be avoided by setting one of the two pantographs as a predetermined pantograph in advance. For example, in addition to the above situation where the wear degrees of the two pantographs are equal, the predetermined pantograph may also be directly selected for work in a situation that the network system fails and thus cannot determine the wear degrees of the two pantographs.

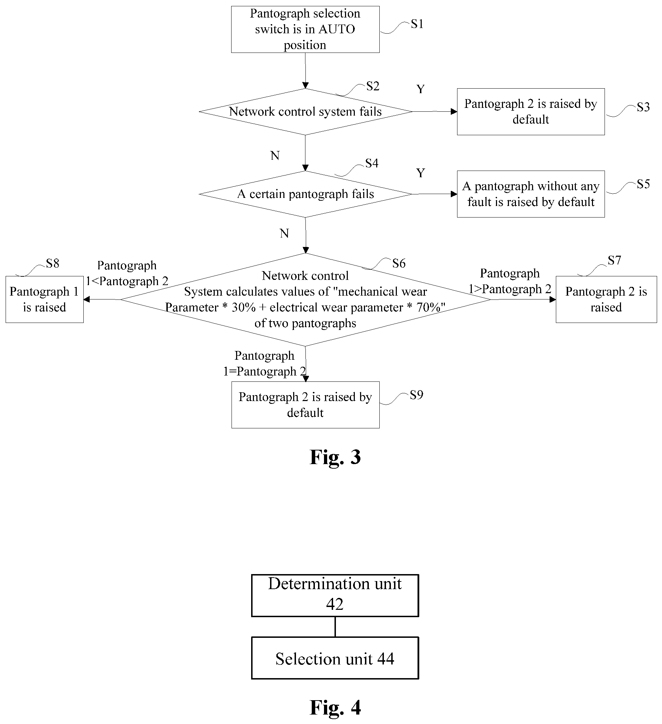

Figure 3 is a flow chart of a method for controlling pantographs of a rail train provided according to an embodiment of the present application. As shown in Figure 3, determining which pantograph to be used by the rail train may include the following steps: 1) whether the pantograph selection switch is in AUTO position; 2) whether the network control system for determining which pantograph is selected for use fails; 3) whether one of the two pantographs fails; and 4) the network control system determines wear conditions of the two pantographs, and selects the pantograph with a lower wear degree based on the wear conditions. The specific process is as following steps S1 to S9.

In step S1, it is determined that the pantograph selection switch is in AUTO position. If the pantograph selection switch is not in AUTO position, the driver sends a control command to select a pantograph. In this case, the driver may select the pantograph according to actual needs. For example, in some special circumstances, if service limits of the two pantographs are inconsistent, the pantograph that can withstand the environmental limit is selected for use. If the pantograph selection switch is in AUTO position, S2 is to be executed.

In step S2, whether the network control system of the rail train fails is determined. If the determination result is that the network control system of the rail train fails, S3 is to be executed; and if the determination result is that the network control system of the rail train does not fail, S4 is to be executed.

In step S3, one of pantograph 1 and pantograph 2 is selected by default. In the embodiment, pantograph 2 is selected by default.

In step S4, whether pantograph 1 or pantograph 2 on the rail train fails is determined. If the determination result is that a pantograph (pantograph 1 or pantograph 2) on the rail train fails, S5 is to be executed; and if the determination result is that no pantograph on the rail train fails, S6 is to be executed.

In step S5, a pantograph without any fault in pantograph 1 and pantograph 2 is selected to be raised by default. For example, if pantograph 1 fails, pantograph 2 is raised; and if pantograph 2 fails, pantograph 1 is raised.

In step S6, the network control system calculates wear degree values of pantograph 1 and pantograph 2, that is, calculates values of "mechanical wear parameter * 30% + electrical wear parameter * 70%" of the two pantographs, and then the wear degree value of pantograph 1 is compared with the wear degree value of pantograph 2. If the wear degree value of pantograph 1 is greater than the wear degree value of pantograph 2, S7 is to be executed. If the wear degree value of pantograph 1 is less than the wear degree value of pantograph 2, S8 is to be executed. If the wear degree value of pantograph 1 is equal to the wear degree value of pantograph 2, S9 is to be executed.

In step S7, pantograph 2 is selected to be raised.

In step S8, pantograph 1 is selected to be raised.

In step S9, pantograph 2 is selected to be raised by default.

An apparatus for controlling pantographs of a rail train is further provided according to an embodiment of the present application. Figure 4 is a structural block diagram of an apparatus for controlling pantographs of a rail train according to an embodiment of the present application. As shown in Figure 4, the apparatus for controlling pantographs of a rail train includes: a determination unit 42 and a selection unit 44. The apparatus is described below.

The determination unit 42 is configured to determine state data of two pantographs on the rail train.

The selection unit 44, connected to the determination unit 42, is configured to determine a pantograph selected for the rail train based on the state data of the two pantographs.

A storage medium is further provided according to an embodiment of the present application. The storage medium includes a program stored thereon, wherein the program, when being executed, controls a device where the storage medium is located to execute any of the above methods for controlling pantographs of a rail train.

A computer device is further provided according to an embodiment of the present application. The computer equipment includes a memory and a processor, the memory stores a computer program. The processor is configured to execute the computer program stored in the memory, and the computer program, when being executed, cause the processor to execute any of the above methods for controlling pantographs of a rail train.

A rail train is further provided according to an embodiment of the present application. The rail train includes the apparatus for controlling pantographs of a rail train, a memory and a processor configured to execute a computer program stored in the memory. The computer program, when being executed, causes the processor to execute any of the above methods for controlling pantographs of a rail train.

The order numbers of the embodiments of the present application are only for description and do not represent advantages or disadvantages of the embodiments.

The descriptions of the embodiments have their own emphases in the embodiments of the present application. For parts that are not described in detail in a certain embodiment, reference may be made to relevant descriptions of other embodiments.

It should be understood that the disclosed technical content in the embodiments of the present application may be implemented in other ways. The apparatus embodiment described above is only illustrative. For example, the division of units may be a logical function division, and has other division methods in actual implementation. For example, multiple units or components may be combined or integrated into another system, or some features may be ignored or not executed. In addition, mutual coupling or direct coupling or communication connection shown or discussed may be indirect coupling or communication connection through some interfaces, units or modules, which may be in electrical or other forms.

The units described as separate components may be or may not be physically separated, and the components shown as units may be or may not be physical units, that is, they may be arranged in one place or may be distributed across multiple units. Some or all of the units may be selected according to actual needs to achieve the purpose of the solutions of the embodiments.

In addition, functional units in the embodiments of the present application may be integrated in a processing unit, or the units may exist physically independently, or two or more units may be integrated in a unit. The integrated units may be implemented in the form of hardware or in the form of software functional units.

If the integrated unit is implemented in the form of a software function unit and sold or used as an independent product, it may be stored in a computer-readable storage medium. Based on such an understanding, the essence of the technical solutions of the present application, or the part that contributes to the conventional technology, or all or part of the technical solutions, may be embodied in the form of a software product, and the software product is stored in a storage medium and includes several instructions to enable a computer equipment (may be a personal computer, a server, or a network equipment, etc.) to execute all or part of the steps of the methods in various embodiments of the present application. The storage medium includes various mediums that can store program codes, such as USB flash disks, read-only memories (ROM), random access memories (RAM), mobile hard disks, magnetic disks, or optical disks.

The above are only preferred embodiments of the present application. It should be pointed out that some improvements and modifications may be made without departing from the principles of the present application for those skilled in the art, and the improvements and modifications should also be considered as the protection scope of the present application.

## INDUSTRIAL APPLICABILITY

The solutions provided according to the embodiments of the present application may be applied to the field of railway trains. In the embodiments of the present application, the pantograph selected for the railway train is determined based on the state data of two pantographs. Since the state data of the pantographs identifies the usage of the pantographs, the technical effect of determining the pantograph selected for the railway train based on the states of the pantographs on the railway train is achieved.

## Claims

1. A method for controlling pantographs of a rail train comprising:

   determining state data of two pantographs on the rail train; and
determining a pantograph selected for the rail train based on the state data of the two pantographs.

2. The method according to claim 1, wherein determining the pantograph selected for the rail train based on the state data of the two pantographs comprises:

   determining a wear degree of each of the two pantographs based on the state data of each of the two pantographs; and
   comparing the wear degrees of the two pantographs to determine the pantograph selected for the rail train.

3. The method according to claim 2, wherein, the state data of the two pantographs comprises mechanical wear parameters of carbon sliders of the two pantographs and electrical wear parameters of the carbon sliders of the two pantographs, determining the wear degree of each of the two pantographs based on the state data of each of the two pantographs comprises:

   assigning a first weight to the mechanical wear parameters and assigning a second weight to the electrical wear parameters; and
   summing the mechanical wear parameter assigned with the first weight and the electrical wear parameter assigned with the second weight of each of the two pantographs to obtain the wear degree of each of the two pantographs.

4. The method according to claim 3, wherein determining the mechanical wear parameters of the carbon sliders of the two pantographs and the electrical wear parameters of the carbon sliders of the two pantographs comprises:

   for each of the two pantographs, acquiring a running distance of the carbon slider of the pantograph while the carbon slider contacts a power grid, and determining the mechanical wear parameter of the carbon slider of the pantograph based on the acquired running distance of the carbon slider of the pantograph while the carbon slider contacts the power grid; and
   for each of the two pantographs, acquiring a heat loss of the carbon slider of the pantograph, and determining the electrical wear parameter of the carbon slider of the pantograph based on the acquired heat loss of the carbon slider of the pantograph.

5. The method according to claim 3, wherein the first weight is 30% and the second weight is 70%.

6. The method according to claim 2, wherein comparing the wear degrees of the two pantographs to determine the pantograph selected for the rail train comprises:

   based on the wear degrees of the two pantographs being same, selecting a predetermined pantograph of the two pantographs; and
   based on the wear degrees of the two pantographs being different, selecting a pantograph with a lower wear degree.

7. An apparatus for controlling pantographs of a rail train comprising:

   a determination unit, configured to determine state data of two pantographs on the rail train; and
   a selection unit, configured to determine a pantograph selected for the rail train based on the state data of the two pantographs.

8. A rail train, comprising the apparatus for controlling pantographs of a rail train according to claim 7.

9. A storage medium comprising a program stored thereon, wherein the program, when being executed, controls a device where the storage medium is located to execute the method for controlling pantographs of a rail train according to any one of claims 1 to 6.

10. A computer device, comprising a processor and a memory, wherein

   the memory stores a computer program; and
   the processor is configured to execute the computer program stored in the memory, and the computer program, when being executed, causes the processor to execute the method for controlling pantographs of a rail train according to any one of claims 1 to 6.

Determine state data of two pantographs on a rail train — S102

↓

Determine a pantograph selected for the rail train based on the state data of the two pantographs — S104

**Fig. 1**

First distribution of pantographs on a train

| Carriage 1 | Carriage 2 | Carriage 3 | Carriage 4 |

Second distribution of pantographs on a train

| Carriage 1 | Carriage 2 | Carriage 3 | Carriage 4 |

**Fig. 2**

Pantograph selection switch is in AUTO position — S1

Network control system fails — S2 — Y → Pantograph 2 is raised by default — S3

N

A certain pantograph fails — S4 — Y → A pantograph without any fault is raised by default — S5

N

S8 — Pantograph 1<Pantograph 2 — Network control System calculates values of "mechanical wear Parameter * 30% + electrical wear parameter * 70%" of two pantographs — S6 — Pantograph 1>Pantograph 2 — S7

Pantograph 1 is raised — S8

Pantograph 2 is raised — S7

Pantograph 1=Pantograph 2

Pantograph 2 is raised by default — S9

**Fig. 3**

Determination unit 42

Selection unit 44

**Fig. 4**

## INTERNATIONAL SEARCH REPORT

| International application No. |
|---|
| **PCT/CN2022/070344** |

**A. CLASSIFICATION OF SUBJECT MATTER**

B60L 5/20(2006.01)i; B60L 5/28(2006.01)i

According to International Patent Classification (IPC) or to both national classification and IPC

**B. FIELDS SEARCHED**

Minimum documentation searched (classification system followed by classification symbols)

B60L, G05B

Documentation searched other than minimum documentation to the extent that such documents are included in the fields searched

Electronic data base consulted during the international search (name of data base and, where practicable, search terms used)

CNABS, CNKI, VEN: 受电弓, 集电弓, 集电器, 磨损, 损耗, 磨耗, 速度, 距离, 状态, 选择, 切换, 更换, 升弓, wear+, fray+, pantograph, slid+

**C. DOCUMENTS CONSIDERED TO BE RELEVANT**

| Category* | Citation of document, with indication, where appropriate, of the relevant passages | Relevant to claim No. |
|---|---|---|
| PX | CN 112659904 A (CRRC QINGDAO SIFANG CO., LTD.) 16 April 2021 (2021-04-16) claims 1-10 | 1-10 |
| Y | CN 107272585 A (FANUC CORPORATION) 20 October 2017 (2017-10-20) description, paragraphs 18-38, figures 1-3 | 1-10 |
| Y | CN 110435432 A (CRRC QINGDAO SIFANG ROLLING STOCK RESEARCH INSTITUTE CO., LTD.) 12 November 2019 (2019-11-12) description, paragraph 75 | 1-10 |
| A | CN 111532138 A (CRRC QINGDAO SIFANG CO., LTD.) 14 August 2020 (2020-08-14) entire document | 1-10 |
| A | CN 108944460 A (NANJING XINGDINGSHENG ELECTRIC EQUIPMENT CO., LTD.) 07 December 2018 (2018-12-07) entire document | 1-10 |
| A | JP 2011109743 A (RAILWAY TECHNICAL RESEARCH INSTITUTE) 02 June 2011 (2011-06-02) entire document | 1-10 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 February 2022** | **24 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/070344**

| Patent document cited in search report | | | Publication date (day/month/year) | Patent family member(s) | | | Publication date (day/month/year) |
|---|---|---|---|---|---|---|---|
| CN | 112659904 | A | 16 April 2021 | None | | | |
| CN | 107272585 | A | 20 October 2017 | DE | 102017003154 | A1 | 12 October 2017 |
| | | | | JP | 2017188038 | A | 12 October 2017 |
| | | | | US | 2017293289 | A1 | 12 October 2017 |
| CN | 110435432 | A | 12 November 2019 | None | | | |
| CN | 111532138 | A | 14 August 2020 | None | | | |
| CN | 108944460 | A | 07 December 2018 | None | | | |
| JP | 2011109743 | A | 02 June 2011 | None | | | |

Form PCT/ISA/210 (patent family annex) (January 2015)